(19) Europäisches Patentamt
European Patent Office
Office européen des brevets

(11) **EP 1 783 366 A1**

(12) **EUROPÄISCHE PATENTANMELDUNG**

(43) Veröffentlichungstag:
**09.05.2007 Patentblatt 2007/19**

(51) Int Cl.:
*F03D 11/00* (2006.01)   *F03D 11/04* (2006.01)
*F03D 7/04* (2006.01)

(21) Anmeldenummer: **06021681.9**

(22) Anmeldetag: **17.10.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **04.11.2005 DE 102005053145**
**11.05.2006 DE 102006022266**

(71) Anmelder: **Daubner & Stommel GbR Bau-Werk-Planung**
**27777 Ganderkesee (DE)**

(72) Erfinder: **Stommel, Matthias**
**27777 Ganderkesee (DE)**

(74) Vertreter: **Aulich, Martin et al**
**Meissner, Bolte & Partner GbR**
**Hollerallee 73**
**28209 Bremen (DE)**

(54) **Windenergieanlage**

(57)    Die Erfindung betrifft eine Windenergieanlage (10) mit einem von Wind antreibbaren Rotor (18) mit zumindest einem Rotorblatt (22), mit einem Generator zur Umwandlung der mechanischen Energie des Rotors (18) in elektrische Energie sowie mit einem Turm (14), an dem der Rotor (18) angeordnet ist, wobei das Rotorblatt (22) eine oder mehrere zusätzliche Massen (36, 40) und/ oder aktive und/oder passive Schwingungsdämpfer (24) aufweist, die derart ausgebildet sind, dass durch äußere Einflüsse ausgelöste, auf den Turm zu- oder von diesem weggerichtete Bewegungen des Rotorblattes (22), insbesondere Schwingungen, verhindert und/oder gedämpft werden. Weiter betrifft die Erfindung ein Verfahren zum Betreiben einer Windenergieanlage, vorzugsweise einer Off-Shore-Windenergieanlage, wobei ein oder mehrere Bauteile der Windenergieanlage, vorzugsweise der Turm (14), zur Reduzierung/Verhinderung von aus Bauteilvibrationen resultierenden, Tiere und/oder Menschen störenden Schallwellen mit Gegenvibrationen beaufschlagt werden, die den Schall erzeugenden Vibrationen des Bauteils (14) entgegengerichtet sind und diese Bauteilvibrationen reduzieren bzw. verhindern.

Fig. 1

EP 1 783 366 A1

**Beschreibung**

Die vorliegende Erfindung betrifft eine Windenergieanlage mit einem von Wind antreibbaren Rotor mit zumindest einem Rotorblatt, mit einem Generator zur Umwandlung der mechanischen Energie des Rotors in elektrische Energie sowie mit einem Turm, an dem der Rotor angeordnet ist. Des Weiteren betrifft die vorliegende Erfindung ein Verfahren zum Betreiben einer derartigen Windenergieanlage.

Verschiedene Bauteile derartiger Windenergieanlagen, insbesondere die Rotorblätter sowie der Turm, neigen dazu, insbesondere durch äußere Einflüsse zu Schwingungen angeregt zu werden. Sowohl die Rotorblätter als auch der Turm werden beispielsweise durch Impulse angeregt, deren Ursache der jeweilige Turmdurchgang jedes Rotorblattes ist. Die von dem Wind ausgeübten Kräfte auf das jeweilige Rotorblatt sind während des Turmdurchganges geringer als in den übrigen Phasen der Rotationsbewegung desselben. Dies hat seine Ursache darin, dass der bezogen auf die Windrichtung hinter dem Rotorblatt angeordnete Turm ein Hindernis für den Wind darstellt.

In Folge der im Vergleich zu den übrigen Phasen der Rotationsbewegung geringeren Kräfte, die auf das Rotorblatt während des Turmdurchgangs wirken, erhalten das Rotorblatt und der Turm einen Bewegungsimpuls nach vorne, d.h. in Richtung der windzugewandten Seite der Windenergieanlage. Die gewisse Elastizität, die sämtlichen Bauteilen originär innewohnt, führt dazu, dass das Rotorblatt und der Turm aus dieser durch den Bewegungsimpuls ausgelösten, nach vorne ausgelenkten Lage nach hinten zurückschwingt, sobald das Rotorblatt den Turmdurchgang beendet hat.

Diese Vorgänge laufen bei jedem Turmdurchgang jedes Rotorblattes ab. Schon bei den heute üblichen Abmessungen der einzelnen Bauteile, insbesondere der Rotorblätter, wirken sich Schwingungen derselben negativ auf die Lebensdauer der Bauteile aus. Auf Grund der Tendenz, Windenergieanlagen mit immer größeren Abmessungen zu konstruieren, nimmt diese Problematik zu.

Eine weitere Ursache von ungewollten Bewegungen, insbesondere Schwingungen, von einzelnen Bauteilen beim Betreiben von Windenergieanlagen sind beispielsweise Veränderungen der Windanstellwinkel der einzelnen Rotorblätter sowie Windturbulenzen.

Die auf den oben beschriebenen äußeren Einflüssen basierenden Schwingungen der Bauteile sind natürlich um so kritischer, je stärker die Anregungsfrequenz der einwirkenden Bewegungsimpulse mit der Eigenfrequenz der eingesetzten Bauteile übereinstimmt. Schlimmstenfalls kann es dabei zu der bei schwingungsfähigen Systemen bekannten Resonanzkatastrophe mit der daraus folgenden Zerstörung der Bauteile kommen.

Weiter können innere und äußere Einflüsse verschiedene Bauteile der Windenergieanlage zu besonderen Schwingungen anregen, deren Frequenzen im für Menschen und/oder Tiere hörbaren Bereich liegen. Diese im Folgenden als Vibrationen bezeichneten Schwingungen führen zu akustischen Signalen, d.h. Geräuschen, die für Menschen und/oder Tiere störend oder sogar schädlich sind. Die Ursache derartiger Bauteilvibrationen liegt häufig in Eigenschwingungen des Generators oder anderer Bauteile der Windenergieanlage. Bauteilvibrationen können vor allem bei Off-Shore-Windenergieanlagen äußerst problematisch sein. Vibrationen des Turms, vor allem desjenigen Turmabschnitts, der sich im Wasser befindet, können zu Geräuschen führen, die Meerestiere, etwa Fische aller Art, stören oder sogar vertreiben.

Aufgabe der vorliegenden Erfindung ist es, eine Windenergieanlage anzugeben, bei der die vorgenannten schädlichen Bewegungen/Schwingungen, insbesondere Vibrationen, des Rotorblattes und/oder anderer Bauteile, insbesondere des Turms, der Windenergieanlage verhindert, reduziert und/oder gedämpft werden. Des Weiteren ist es Aufgabe der vorliegenden Erfindung, ein Verfahren zum Betreiben einer derartigen Windenergieanlage anzugeben.

Diese Aufgabe wird gelöst durch die Merkmale des Anspruches 1.

Vorteilhafterweise weist das Rotorblatt demnach zusätzliche Massen und/oder aktive und/oder passive Schwingungsdämpfer auf, die derart ausgebildet sind, dass durch äußere Einflüsse ausgelöste, auf den Turm zu- und/oder von diesem weggerichtete Bewegungen bzw. Bewegungskomponenten des Rotorblattes, insbesondere Schwingungen, verhindert und/oder gedämpft bzw. verringert werden. Es sollen erfindungsgemäß daher diejenigen Bewegungskomponenten der Bewegungen des Rotorblattes eingeschränkt oder verhindert werden, die aus der senkrecht zur Rotorwelle verlaufenden Rotorebene bzw. Rotorblattebene herausführen.

Der oder die gegenüber dem üblichen Rotorblattaufbau zusätzlichen Massen des Rotorblattes führen bei geeigneter Positionierung und Dimensionierung dazu, dass das Gesamtsystem aus Rotorblatt und zusätzlicher Masse eine gegenüber dem Rotorblatt veränderte Schwingungseigenfrequenz aufweist. Dabei sind der oder die zusätzlichen Massen zur Veränderung der Schwingungseigenfrequenz des Rotorblattes vorzugsweise derart angeordnet und/oder dimensioniert, dass die resultierende Schwingungseigenfrequenz des Systems aus der zusätzlichen Masse und dem Rotorblatt außerhalb des für die Anlage unter den gegebenen Bedingungen zu erwartenden Wertebereichs der Anregungsfrequenzen liegt. Für jede Windenergieanlage sind für jeweils theoretisch vorhersagbare Windgeschwindigkeiten bei den gegebenen Dimensionen der Anlage die theoretisch denkbaren Anregungsfrequenzen bestimmbar, d.h. diejenigen Frequenzen, bei denen grundsätzlich die auf den Turm zu- oder von dem Turm weggerichteten Bewegungen bzw. Bewegungskomponenten des Rotorblattes ausgelöst werden können. Wenn die Schwingungseigenfrequenzen aufgrund der geeigneten Anpassung der zusätzlichen Massen des Rotorblattes weit außerhalb des Wertebereichs der zu erwartenden Anregungsfrequenzen liegen, werden insbesondere sogenannte Resonanzkatastrophen wirksam verhindert.

Die zusätzlichen Massen werden vorzugsweise im Inneren der Rotorblätter befestigt. Alternativ ist es natürlich auch möglich, diese teilweise oder vollständig außerhalb der Rotorblätter anzuordnen. Vorzugsweise sollten die zusätzlichen Massen, um die Aerodynamik nicht zu stören, auf der windabgewandten Seite des Rotorblattes angeordnet werden. Die Massen können natürlich jedwede Form haben, wie der Fachmann des Standes der Technik erkennt. Je nach Anordnung und Gewicht der Massen kann das Eigenschwingverhalten des Rotorblattes, vorzugsweise sämtlicher Rotorblätter der Windenergieanlage, wie gewünscht verändert werden.

Alternativ zu den das Eigenschwingverhalten verändernden Massen sind erfindungsgemäß die aktiven und/oder passiven Schwingungsdämpfer vorgesehen, die ebenfalls Teil der Rotorblätter sein können. Durch diese Schwingungsdämpfer sind Bewegungsimpulse des Rotorblattes auslösbar, die den auf den Turm zu- oder von diesem weggerichteten Bewegungen des entsprechend ausgestatteten Rotorblattes entgegengerichtet sind und diese Bewegungen zumindest teilweise, vorzugsweise vollständig, kompensieren. Für die Anordnung und die Dimensionierung der aktiven und/oder passiven Schwingungsdämpfer gilt das oben für die Anordnung der zusätzlichen Massen Gesagte.

Die die auf den Turm zu- oder von diesem weggerichteten Bewegungen kompensierenden Bewegungsimpulse sind vorzugsweise auslösbar, sobald die auf den Turm zu- oder von diesem weggerichtete Bewegung beginnt oder zu einem Zeitpunkt unmittelbar davor oder danach. Wenn beispielsweise eine von dem Turm weggerichtete Bewegung durch den Turmdurchgang eines Rotorblattes ausgelöst wird, kann bei jedem Turmdurchgang eines Rotorblattes ein das Rotorblatt auf den Turm zugerichteter Bewegungsimpuls ausgelöst werden, der dem Impuls entgegengesetzt ist, der von außen durch den Turmdurchgang ausgelöst wird. Kurz gesagt wird dem durch äußeren Einfluss bewirkten Bewegungsimpuls des Rotorblattes, der dieses von dem Turm wegbewegt, ein in entgegengesetzter Richtung verlaufender Bewegungsimpuls entgegengerichtet.

Die Aufgabe der vorliegenden Erfindung wird auch gelöst durch die Merkmale des Anspruches 6.

Danach weist die Windenergieanlage einen oder mehrere aktive Schwingungsdämpfer zur Erzeugung von Bewegungsimpulsen auf, die speziell einer durch äußere Einflüsse ausgelösten Bewegung des Turms der Windenergieanlage entgegenwirken. Dabei weist vorzugsweise der Turm und/oder die Gondel der Windenergieanlage den aktiven Schwingungsdämpfer auf. Dieser kann im Inneren des Turms und/oder im Inneren der Gondel angeordnet sein. Alternativ ist naturgemäß denkbar, diese zumindest teilweise auch außen an den Bauteilen anzuordnen.

In einer bevorzugten Ausführungsform ist der aktive Schwingungsdämpfer derart ausgebildet, dass der durch diesen auslösbare Bewegungsimpuls einer durch den Turmdurchgang jedes Rotorblattes erzeugten Turmbewegung entgegenwirkt. Dabei kann der aktive Schwingungsdämpfer über zumindest zwei gegenläufig um eine insbesondere gemeinsame Drehachse rotierende Massen verfügen, wobei jede Masse bezogen auf die Drehachse eine Unwucht aufweist. Die rotierenden Massen können dabei derart angeordnet sein und die Rotationsfrequenzen der rotierenden Massen derart aufeinander abgestimmt sein, dass ein der durch äußeren Einfluss ausgelösten Bewegung entgegengerichteter Gegenimpuls auslösbar ist.

Die Frequenz, mit der die Massen um die vorzugsweise vertikale Drehachse rotieren, ist dabei an die Anzahl der Rotorblätter angepasst. Die Mehrzahl der heute üblichen Windenergieanlagen weist drei Rotorblätter auf. Während einer vollständigen Umdrehung des Rotors ergeben sich demnach drei Turmdurchgänge. Diese drei Turmdurchgänge können beispielsweise dadurch kompensiert werden, dass die Frequenz der Massen, mit der diese um die Drehachse rotieren, der dreifachen Frequenz der Rotorblätter entspricht, da jede vollständige Drehung der Massen genau einen Gegenimpuls bewirkt.

Besonders bevorzugt weist die Windenergieanlage Sensoren auf, mittels derer von dem Turm weg- oder auf den Turm zugerichtete Bewegungen des Rotorblattes und/oder Bewegungen des Turms detektierbar sind. Abhängig von derart detektierten Bewegungen können dann die zumindest teilweise kompensierenden Gegenimpulse der aktiven Schwingungsdämpfer ausgelöst werden.

Des Weiteren kann ein Sensor vorgesehen sein, der im Betrieb jeweils die momentane Umdrehungsgeschwindigkeit des oder der Rotorblätter erfasst und/oder eine definierte Nullpunktslage der Rotorblätter, so dass der Turmdurchgang jedes Rotorblattes vorbestimmt werden kann. Dementsprechend kann der Sensor die momentane Umdrehungsgeschwindigkeit des Rotorblattes bestimmen, wobei aus der Umdrehungsgeschwindigkeit mittels einer geeigneten Recheneinheit der Zeitpunkt nachfolgender Turmdurchgänge des Rotorblattes vorbestimmbar ist und wobei den erwarteten Bewegungen des Rotorblattes entgegengerichtete Impulse der aktiven Schwingungsdämpfer zu einem durch die Recheneinheit errechneten Zeitpunkt eines Turmdurchganges auslösbar sind.

Die vorliegende Erfindung bezieht sich des Weiteren auf ein Verfahren zum Betreiben einer oben genannten Windenergieanlage gemäß den Ansprüchen 17 und 18.

Die Aufgabe der vorliegenden Erfindung wird auch gelöst durch ein Verfahren gemäß Anspruch 19.

Danach wird ein Verfahren zum Betreiben einer Windenergieanlage angegeben, vorzugsweise einer Off-Shore-Windenergieanlage, wobei ein oder mehrere Bauteile der Windenergieanlage, vorzugsweise der Turm, zur Reduzierung/Verhinderung von aus Bauteilvibrationen resultierenden, Tiere und/oder Menschen störenden Schallwellen mit Gegenvibrationen beaufschlagt werden, die den Schall erzeugenden Vibrationen des Bauteils entgegengerichtet sind und diese Bauteilvibrationen reduzieren bzw. verhindern. Demnach werden ein oder mehrere Bauteile der Windenergieanlage auch in dem für Tiere und/oder Menschen hörbaren Schwingungsbereich mit entsprechenden Gegenbewegungen beaufschlagt, nämlich Gegenvibrationen.

Wenn die Windenergieanlage als Off-Shore-Windenergieanlage ausgebildet ist, wird vorzugsweise zumindest der mit Wasser bedeckte Turmabschnitt mit Gegenvibrationen beaufschlagt, sodass Schall erzeugende, Meerestiere störende Vibrationen dieses Turmabschnitts reduziert bzw. verhindert werden. Bauteilvibrationen können vor allem bei derartigen Off-Shore-Windenergieanlagen äußerst problematisch sein. Denn Vibrationen des Turms, vor allem desjenigen Turmabschnitts, der sich im Wasser befindet, können zu Geräuschen führen, die Meerestiere, etwa Fische aller Art, stören oder sogar vertreiben.

In einer besonders vorteilhaften Ausführungsform erfassen ein oder mehrere Sensoren die Schallwellen verursachenden Bauteilvibrationen. Die Beaufschlagung mit den Gegenvibrationen erfolgt vorzugsweise abhängig von den so erfassten Bauteilvibrationen, insbesondere abhängig von der Frequenz und der Amplitude der erfassten Bauteilvibrationen.

Das Bauteil, wie etwa der Turm, kann mit Gegenvibrationen beaufschlagt werden, deren Amplitude und/oder Frequenz zumindest annähernd mit der Amplitude der erfassten Bauteilvibration übereinstimmt, vorzugsweise mit dieser identisch ist.

Ein oder mehrere Bauteile der Windenergieanlage, vorzugsweise der Turm, können einen Vibrationserzeuger aufweisen, über den das Bauteil zur ReduzierungNerhinderung von aus Bauteilvibrationen resultierenden, Tiere und/ oder Menschen störenden Schallwellen mit Gegenvibrationen beaufschlagbar ist, die den Schall erzeugenden Vibrationen des Bauteils entgegengerichtet sind und diese Bauteilvibrationen reduzieren bzw. verhindern.

Eine weitere Windenergieanlage zur Lösung der erfindungsgemäßen Aufgabe weist die Merkmale des Anspruchs 23 auf.

Danach weisen die Windenergieanlage, insbesondere ein oder mehrere Bauteile der Windenergieanlage, vorzugsweise der Turm, einen Vibrationserzeuger auf, über den das Bauteil zur ReduzierungNerhinderung von aus Bauteilvibrationen resultierenden, Tiere und/oder Menschen störenden Schallwellen mit Gegenvibrationen beaufschlagbar ist, die den Schall erzeugenden Vibrationen des Bauteils entgegengerichtet sind und diese Bauteilvibrationen reduzieren bzw. verhindern.

In weiterer Ausbildung der Erfindung weist die Windenergieanlage einen Vibrationserzeuger auf mit steuerbar bewegbaren Massen oder Massekörpern, die mit dem Bauteil mittelbar oder unmittelbar verbunden sind und zur Erzeugung der Vibrationen relativ zum Bauteil steuerbar bewegbar sind.

Der Vibrationsgenerator kann im Inneren des Turms mehrere, relativ zum Turm steuerbar bewegbare Massekörper aufweisen, die in einer zumindest annähernd horizontal verlaufenden Ebene bewegbar sind.

Jeder bewegbare Massekörper ist vorteilhafterweise entlang einer Geraden geführt, die zumindest annähernd vom Turmzentrum bis zum Turmrandbereich verläuft.

Die bewegbaren Massekörper sind in einer besonderen Ausführungsform annähernd sternförmig über den Turmquerschnitt verteilt.

Zum Erfassen bzw. zur Detektion von Bauteilvibrationen sind an dem Bauteil, insbesondere an dem Turm, ein oder mehrere Sensoren zu Erfassung derselben angeordnet.

Die steuer- und/oder regelbaren Bauteile der vorliegenden Windenergieanlage, insbesondere der aktive Schwingungsdämpfer und/oder der Vibrationserzeuger und/oder die Sensoren zur Erfassung von Schwingungen und/ oder Vibrationen können über eine oder mehrere geeignete Steuerungs- und/oder Regelungseinrichtungen gesteuert bzw. geregelt werden. Weiter können die im Rahmen dieser Anmeldung beschriebenen Verfahren mittels geeigneter Steuerungs- und/oder Regelungseinrichtungen umgesetzt werden.

Schließlich kann die Windenergieanlage in einer weiteren Ausführungsform ein Notstromaggregat aufweisen. Dabei kann das Notstromaggregat dazu dienen, ein oder mehrere, vorzugsweise sämtliche strombetriebenen Bauteile der vorliegenden Windenergieanlage bei einem Netzausfall mit Strom bzw. Energie zu versorgen, insbesondere ein oder mehrere Steuerungs- und/oder Regelungseinrichtungen und/oder Sensoren, etwa die Sensoren zur Erfassung von Schwingungen und/oder Vibrationen, und/oder den Vibrationserzeuger und/oder den aktiven Schwingungsdämpfer.

Weitere Merkmale der vorliegenden Erfindung ergeben sich aus den beigefügten Unteransprüchen, aus der nachfolgenden Beschreibung konkreter Ausführungsbeispiele der vorliegenden Erfindung sowie aus den beigefügten Zeichnungen. Darin zeigen:

Fig. 1    eine Seitenansicht einer erfindungsgemäßen Windenergieanlage mit aktivem Schwingungsdämpfer,

Fig. 2    eine Seitenansicht eines Rotors einer Windenergieanlage mit zusätzlicher Masse,

Fig. 3    eine Seitenansicht einer weiteren Ausführungsform einer erfindungsgemäßen Windenergieanlage, nämlich einer Off-Shore-Windenergieanlage mit im Turminneren angeordneten Vibrationserzeuger,

Fig. 4    einen Horizontalquerschnitt durch den Turm der Windenergieanlage der Fig. 3.

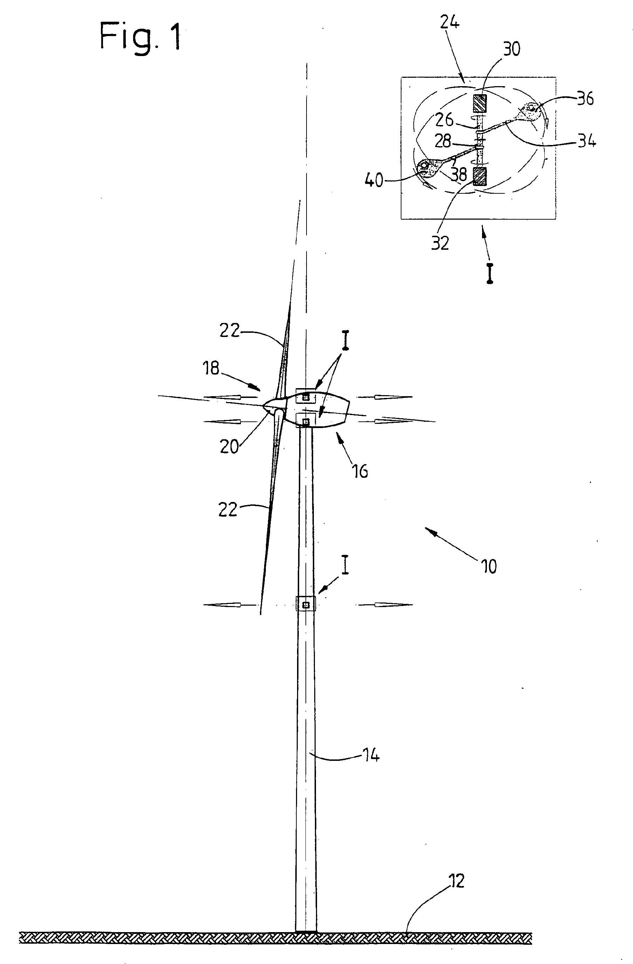

In der Fig. 1 ist eine Windenergieanlage 10 dargestellt, die am oberen Ende eines vertikalen, auf einem horizontalen Untergrund 12 angeordneten Turms 14 eine auf der Turmoberseite angeordnete Gondel 16 aufweist. Wie der Fachmann des Standes der Technik weiß, sind für die genaue Ausbildung eines Turms einer Windenergieanlage vielfältige Ausführungsformen denkbar. Die Erfindung ist naturgemäß nicht auf die in der Zeichnung beschriebene, kegelstumpfförmige Form des Turms 14 beschränkt.

An einem windzugewandten Ende der Gondel 16 ist ein Rotor 18 angeordnet, der eine Nabe 20 aufweist. Mit der Nabe 20 verbunden sind drei Rotorblätter 22, wobei die Rotorblattwurzeln der Rotorblätter 22 in entsprechende Öffnungen der Nabe 20 eingesteckt und in bekannter Weise mit dieser verbunden sind.

Der Rotor 18 dreht sich um eine leicht gegenüber der Horizontalen nach oben geneigte Achse. Sobald Wind auf die Rotorblätter 22 trifft, wird der Rotor 18 mitsamt Rotorblättern 22 um die Rotorachse in Rotation versetzt. Die Bewegung der Rotorachse wird von einem innerhalb der Gondel angeordneten Generator in elektrischen Strom umgewandelt. Die Rotorblätter 22 überstreichen während der Rotation eine Kreisfläche. Über eine nicht dargestellte, allerdings den Fachleuten des Standes der Technik bekannte Verstelleinrichtung können die Rotorblätter 22 einzeln in ihrer Stellung zum Wind verändert werden, d.h., der Anstellwinkel der Rotorblätter 22 zum Wind ist einstellbar.

Der grundsätzliche Aufbau der Windenergieanlage 10 mit zumindest annähernd horizontaler Rotorachse ist im Stand der Technik bekannt, so dass auf eine detaillierte Darstellung derselben verzichtet wird.

Mit dem Bezugszeichen I ist in der Fig. 1 jeweils eine Einzelheit der Windenergieanlage 10 gekennzeichnet, die vergrößert im rechten oberen Abschnitt der Fig. 1 dargestellt ist. Sie zeigt einen aktiven Schwingungsdämpfer 24, wie er im Inneren des Turms 14 sowie der Gondel 16 angeordnet ist. Der aktive Schwingungsdämpfer 24 weist zwei vertikal übereinander angeordnete, koaxiale Wellen 26, 28 auf. Die obere Welle 26 wird durch einen Motor 30 in Rotationsbewegung versetzt, die untere Welle 28 durch einen Motor 32. Mit der oberen Welle 26 drehfest verbunden ist ein Ende eines starren Armes 34. Am entgegengesetzten Ende des starren Armes 34 ist eine Masse bzw. ein Gewicht 36 angeordnet.

Spiegelbildlich zu dem starren Arm 34 bzw. dem Gewicht 36 ist an der unteren Welle 28 ein starrer Arm 38 mit entsprechend endseitigem Gewicht bzw. endseitiger Masse 40 angeordnet.

Die obere Welle 26 und die untere Welle 28 rotieren gegenläufig, so dass pro vollständiger Drehung die Gewichte 36 und 40 jeweils ein Mal in ein und derselben vertikalen Ebene angeordnet sind, d.h. in die gleiche Richtung zeigen. In dieser Stellung addieren sich die Impulse der Gewichte 36, 40 so dass insgesamt ein entsprechender Bewegungsimpuls auf den mit dem aktiven Schwingungsdämpfer verbundenen Turm 14 bzw. auf die mit dem Schwingungsdämpfer 24 verbundene Gondel 16 ausgeübt wird.

Die Rotationsfrequenz der einzelnen Gewichte 36, 40 ist abgestimmt auf die Frequenz, mit der sich die Rotorblätter 22 drehen. Wie in der Zeichnung zu erkennen ist, befindet sich ein nach unten gerichtetes Rotorblatt 22 in einem sogenannten Turmdurchgang, d.h. das Rotorblatt überstreicht in dem in der Zeichnung festgehaltenen Moment den Turm 14. Bezogen auf eine nicht dargestellte Vorderansicht der Windenergieanlage 10 überdeckt dieses Rotorblatt 22 zumindest teilweise den oberen Bereich des Turmes 14. Während dieser Überdeckungsphase sind die Kräfte, die auf dieses Rotorblatt 22 wirken, geringer als während dessen übriger Rotationsphase. Entsprechend wird ein durch die Pfeile dargestellter Impuls nach vorne, d.h. in der Zeichnung nach links, auf das Rotorblatt 22 und damit auf die Gondel 16 und den Turm 14 ausgeübt.

Zur Kompensierung dieses Bewegungsimpulses sind die Rotationsfrequenzen der Gewichte 36, 40 des aktiven Schwingungsdämpfers 24 so abgestimmt, dass sie sich dann in der gemeinsamen vertikalen Ebene befinden, wenn das Rotorblatt 22 den Turmdurchgang vollzieht. Entsprechend werden während des Turmdurchganges Gegenimpulse durch die aktiven Schwingungsdämpfer 24 ausgelöst, die durch die in der Zeichnung nach rechts gerichteten Pfeile dargestellt sind. Es findet eine Kompensierung der Bewegungen statt.

Da die Kompensierung bei jedem Turmdurchgang jeden Rotorblattes vorgenommen werden muss, ist die Frequenz, mit der die Gewichte 36, 40 rotieren, drei Mal so groß wie die Rotationsfrequenz der Rotorblätter 22.

Wie der Fachmann erkennt, sind im Rahmen der Erfindung verschiedenste andere aktive Schwingungsdämpfer vorstellbar, die im oder an dem Turm 14, der Gondel 16 oder dem Rotor 18 bzw. den Rotorblättern 22 angeordnet sein können. Gleiches gilt für passive Schwingungsdämpfer, die in oder an den Rotorblättern 22 positioniert sein können.

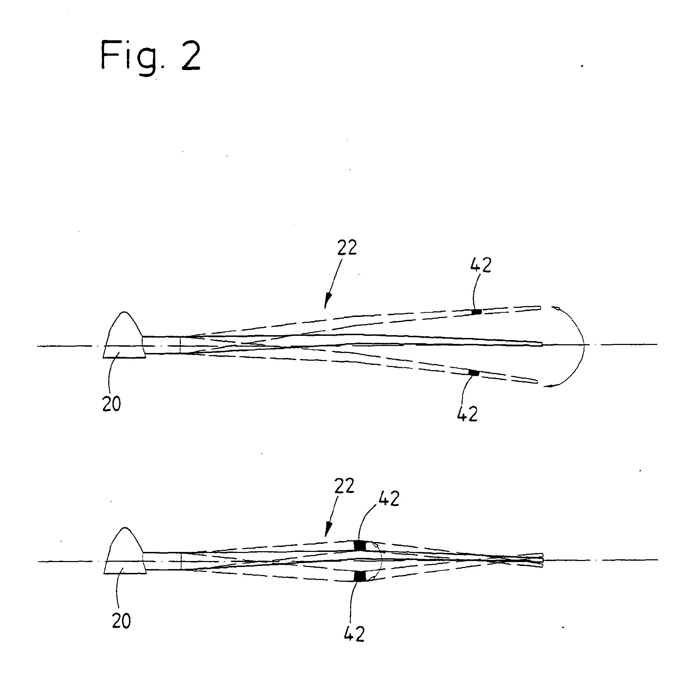

Fig. 2 zeigt beispielhaft zwei verschiedene Positionen, an den zusätzliche Massen bzw. Gewichte 42 in dem Rotorblatt 22 angeordnet sein können. Diese Massen 42 bewirken, dass das Eigenschwingverhalten des Rotorblattes 22, d.h. die Eigenfrequenz, gegenüber der durch die gegebene Bauform vorgegebenen Eigenfrequenz verändert wird. Diese Veränderung der Eigenfrequenz bzw. des Eigenschwingverhaltens dient dazu, dass die resultierende Schwingungseigenfrequenz bzw. das resultierende Eigenschwingverhalten des Systems aus der zusätzlichen Masse 42 und dem Rotorblatt 22 außerhalb der für die Anlage unter den vorgegebenen Bedingungen zu erwartenden Anregungsfrequenzen liegt. Ein schädliches Aufschwingen der Rotorblätter 22 wird unterbunden.

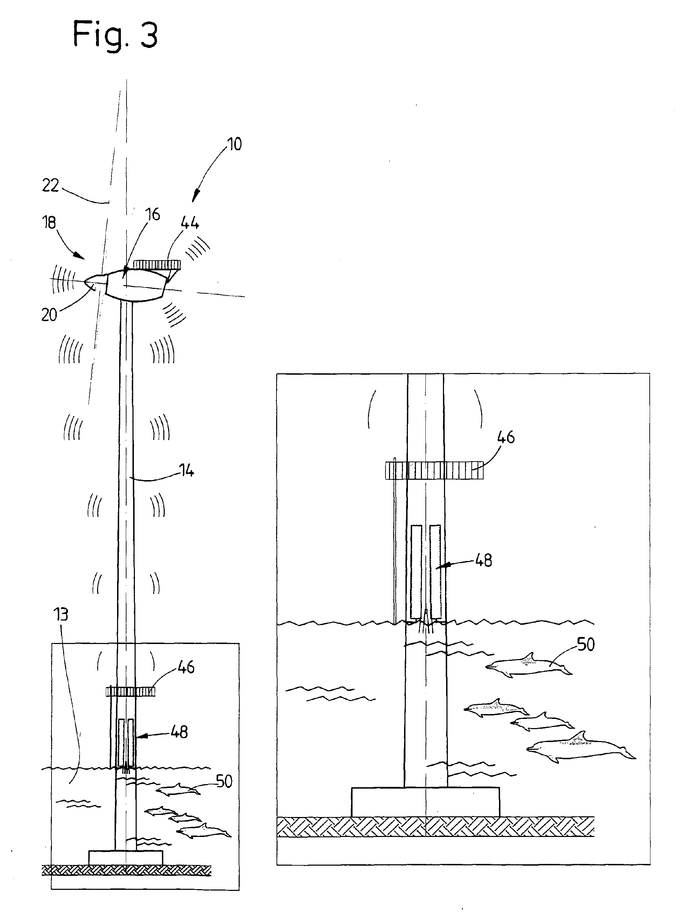

In der Fig. 3 ist eine Off-Shore-Windenergieanlage 10 dargestellt. Funktionsgleiche Bauteile sind mit den gleichen Bezugzeichen versehen wie bei der Windenergieanlage der Fig. 1.

Am oberen Ende eines vertikalen Turmes 14 ist auf der Turmoberseite eine Gondel 16 angeordnet. Der Turm 14 ist in nicht näher beschriebener Weise im Meeresboden verankert und wird von Wasser 13 umspült. Wie bei der Windenergieanlage 10 der Fig. 1 ist an dem windzugewandten Ende der Gondel 16 ein Rotor 18 angeordnet, der eine Nabe 20 aufweist. Mit der Nabe 20 verbunden sind drei Rotorblätter 22, wobei die Rotorblattwurzeln der Rotorblätter 22 in entsprechende Öffnungen der Nabe 20 eingesteckt und in bekannter Weise mit dieser verbunden sind. Der Rotor 18 dreht sich um eine leicht gegenüber der Horizontalen nach oben geneigten Achse. Sobald Wind auf die Rotorblätter 22 trifft, wird der Rotor 18 mitsamt Rotorblättern 22 um die Rotorachse in Rotation versetzt. Die Bewegung der Rotorachse wird von einem innerhalb der Gondel 16 angeordneten Generator in elektrischen Strom umgewandelt. Über eine Verstelleinrichtung können die Rotorblätter 22 einzeln in ihrer Stellung zum Wind verändert werden, das heißt, der Anstellwinkel der Rotorblätter 22 zum Wind ist einstellbar.

An der Oberseite der Gondel 16 ist eine horizontal verlaufende Hubschrauberlandeplattform 44 angeordnet. In gleicher Weise ist im unteren Bereich des Turmes 14 eine weitere Hubschrauberlandeplattform 46 angeordnet. Die Plattformen 44, 46 sind über geeignete Verbindungs- und Stützkonstruktionen an der Windenergieanlage 10 befestigt. Ein nicht dargestellter Hubschrauber kann sowohl auf der Plattform 44 als auch auf der Plattform 46 landen. Nach Landung des Hubschraubers auf einer der Plattformen 44 oder 46 können am unteren und/oder oberen Teil der Windenergieanlage 10 notwendige Wartungsoder Reparaturmaßnahmen durchgeführt werden.

Der grundsätzliche Aufbau der Off-Shore-Windenergieanlage 10 mit zumindest annähernd horizontaler Rotorachse ist im Stand der Technik bekannt, so dass auf eine detaillierte Darstellung derselben verzichtet wird.

Im Inneren des Turms 14 ist ein in Fig. 3 nur schematisch dargestellter Vibrationsgenerator 48 angeordnet. Der Vibrationsgenerator 48 ermöglicht es, Schwingungen, nämlich Vibrationen des Turms zu kompensieren, die eine Frequenz aufweisen, die im für Meerestiere hörbaren Bereich angesiedelt ist. Derartige Vibrationen können ohne die erfindungsgemäße Kompensation zu einer für die Meerestiere schädlichen Schallwellenerzeugung und -ausbreitung führen.

Nicht dargestellte Körperschall- und/oder Vibrationssensoren erfassen dabei diejenigen Vibrationen des Turms oder anderer Bauteile der Windenergieanlage 10, die im für Meerestiere, wie etwa Delphine 50, hörbaren Frequenzbereich angesiedelt sind. Diese Vibrationen bzw. die diese Vibrationen kennzeichnenden Parameter werden gemessen, wie etwa die Frequenz und die Amplitude der Vibrationen. Naturgemäß können die gemessenen Vibrationen aus einer Überlagerung von Vibrationen verschiedener Frequenzen bestehen. Die einzelnen Frequenzen können in diesem Fall mittels geeigneter Analysemethoden, wie etwa einer Fourier-Analyse, herausgefiltert werden.

Abhängig von den gemessenen Vibrationen wird der Turm mittels des Vibrationsgenerators 48 mit Gegenvibrationen belegt. Die relevanten Parameter der Gegenvibrationen werden dabei so eingestellt bzw. gesteuert, dass die Gegenvibrationen den Schall erzeugenden Vibrationen des Bauteils entgegenwirken und diese löschen, zumindest aber reduzieren.

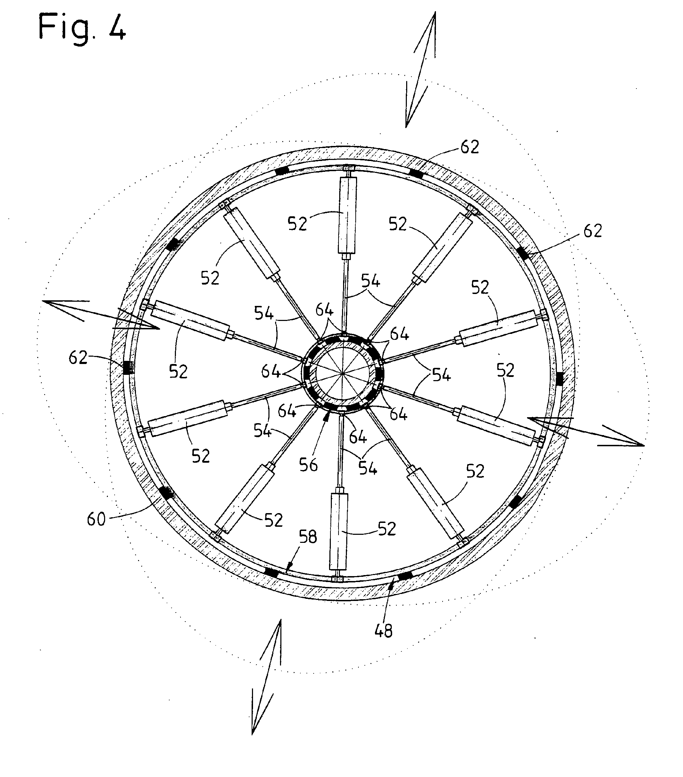

Fig. 4 zeigt einen Horizontalquerschnitt durch den Turm 14. Gut zu erkennen ist eine besondere Ausführungsform eines im Turminneren angeordneten Vibrationsgenerators 48.

Der Vibrationsgenerator 48 weist über den Turmquerschnitt sternförmig verteilte Massekörper 52 auf. Jeder Massekörper 52 ist jeweils entlang einer annähernd radial verlaufenden Führung, nämlich einer Führungsstange 54 steuerbar bewegbar in der Horizontalebene geführt, und zwar nach Art eines entlang der Führungsstange 54 verschiebbaren Schlittens.

Jede der Führungsstangen 54 ist dabei im Turmzentrum mit einem Ende mit einem zentralen Haltering 56 verbunden, nämlich an diesem befestigt. Entsprechend sind die Enden der Führungstangen 54 in Umfangsrichtung um den Haltering 56 verteilt angeordnet. Mit dem jeweils anderen Ende ist jede Führungsstange 54 mit einem äußeren Verbindungsring 58 verbunden bzw. an diesem befestigt.

Der zentrale Haltering 56 weißt einen gegenüber dem Verbindungsring 58 deutlich geringeren Durchmesser auf. Sowohl der äußere Verbindungsring 58 als auch der zentrale Haltering 56 sind konzentrisch zur im Querschnitt kreisförmigen Turmwandung 60 angeordnet. Der Verbindungsring 58 verläuft dabei in einem geringen radialen Abstand zu der Turmwandung 60, d.h. dessen Durchmesser ist nur geringfügig kleiner als der Durchmesser der Turmwandung 60. Über Verbindungsstege 62 ist der Verbindungsring 58 fest mit der Turmwandung verbunden, insbesondere verschraubt. Der zentrale Haltering 56 kann beispielsweise durch geeignete Stürzkonstruktionen im Erdboden, insbesondere dem Turmfundament, abgestützt sein.

Jeweils zwei Führungsstangen 54 und somit jeweils zwei Massekörper 52 sind in derselben Radialrichtung angeordnet. Diese bezogen auf deren Anordnung an dem Haltering 56 gegenüberliegenden Führungsstangen 54 schließen dementsprechend miteinander einen Winkel $\alpha$ von 180° ein. Sämtliche Führungstagen 54 schließen mit jeweils benachbarten Führungstangen identische Winkel ein, wobei die Summe aller Einzelwinkel 360° ergibt.

Mittels nicht explizit dargestellter Antriebsmittel, beispielsweise Elektromotoren sowie entsprechenden Getriebemitteln, können die einzelnen Massekörper 52 entlang der jeweiligen Führungsstangen 54 in Richtung des Turmzentrums, d.h. bis zum Haltering 56 bewegt werden, sowie in die entgegengesetzte Richtung bis zum Verbindungsring 58. Wenn diese linearen Bewegungen der Massekörper 52 mit positiver oder negativer Beschleunigung erfolgen, d.h. die Massekörper 52 beschleunigt oder abgebremst werden, werden Kräfte auf den Turm 14 übertragen. Durch entsprechende zeitliche Abfolge geeigneter Hin- und Herbewegungen der Massekörper 52, d.h. bei geeigneter Steuerung der Beschleunigungs- und Abbremsvorgänge, kann der Turm 14 mit Vibrationen belegt werden.

Bei einer beschleunigten Bewegung eines der Massekörper 52 auf den Haltering 56 zu oder bei einem Abbremsvorgang während einer Bewegung auf den Verbindungsring 58 zu werden auf die Turmwandung 60 Kräfte übertragen, die nach radial außen, d.h. vom Turmzentrum weg gerichtet sind. Bei entgegengesetzten Beschleunigungs- bzw. Abbremsvorgängen werden ebenfalls auf die Turmwandung 60 Kräfte übertragen, allerdings in Richtung des Turmzentrums.

Im einfachsten Fall finden die Abbremsvorgänge unmittelbar an dem Haltering 56 bzw. dem Verbindungsring 58 statt, indem die Massekörper 52 dort durch Anlage an entsprechende Anschläge 64 gestoppt werden. Am Haltering 56 können Dämpfer, bspw. Öldruckdämpfer, vorgesehen sein, die eine auf den Haltering 56 bzw. das Turmzentrum zugerichtete Bewegung der Massekörper abbremsen.

Denkbar ist aber - alternativ oder zusätzlich - auch, steuerbare Bremsmittel vorzusehen, mit denen die Massekörper 52 auch im Verlauf ihrer Bewegungen entlang der Führungsstangen 54 gebremst werden können.

Sämtliche Massekörper 52 werden durch eine entsprechende Steuereinrichtung unabhängig voneinander gesteuert, insbesondere zu einstellbaren Zeitpunkten für ebenfalls einstellbare Zeitdauern beschleunigt und/oder abgebremst. Die Steuereinrichtung verarbeitet die von den Sensoren stammenden Signale und steuert die Massekörper 52 abhängig von diesen Signalen. Neben anderen Parametern sind die Beträge der Beschleunigungs- bzw. Abbremskennwerte sowie die Frequenz einstellbar, mit der die jeweiligen Beschleunigungs- und Abbremsvorgänge erfolgen.

Durch geeignete Überlagerung und Steuerung der einzelnen Beschleunigungs- bzw. Abbremsbewegungen der Massekörper 52 kann der Turm mit überlagerten Vibrationsbewegungen einstellbarer Frequenz und Auslenkung belegt werden, die den bauteilbedingten, gemessenen Vibrationen entgegenwirken. So ist es möglich auch komplexe Vibrationsbewegungen zu generieren.

Wie der Fachmann erkennt, gibt es für die Bauform eines erfindungsgemäßen Vibrationsgenerators vielfältige Möglichkeiten. Die Erfindung ist demnach nicht auf die vorgenannten Ausführungsbeispiele beschränkt.

Bezugszeichenliste:

| | |
|---|---|
| 10 | Windenergieanlage |
| 12 | Untergrund |
| 13 | Wasser |
| 14 | Turm |
| 16 | Gondel |
| 18 | Rotor |
| 20 | Nabe |
| 22 | Rotorblatt |
| 24 | aktiver Schwingungsdämpfer |
| 26 | obere Welle |
| 28 | untere Welle |
| 30 | Motor |
| 32 | Motor |
| 34 | starrer Arm |
| 36 | Gewicht |
| 38 | starrer Arm |
| 40 | Gewicht |
| 42 | Masse |
| 44 | Landeplattform |
| 46 | Landeplattform |
| 48 | Vibrationsgenerator |
| 50 | Delphine |
| 52 | Massekörper |
| 54 | Führungsstange |
| 56 | Haltering |

58   Verbindungsring
60   Turmwandung
62   Verbindungssteg
64   Anschlag


**Patentansprüche**

1.   Windenergieanlage mit einem von Wind antreibbaren Rotor (18) mit zumindest einem Rotorblatt (22), mit einem Generator zur Umwandlung der mechanischen Energie des Rotors (18) in elektrische Energie sowie mit einem Turm (14), an dem der Rotor (18) angeordnet ist, **dadurch gekennzeichnet, dass** das Rotorblatt (22) eine oder mehrere zusätzliche Massen (42) und/oder aktive und/oder passive Schwingungsdämpfer aufweist, die derart ausgebildet sind, dass durch äußere Einflüsse ausgelöste, auf den Turm (14) zu- und/oder von diesem weggerichtete Bewegungen des Rotorblattes (22), insbesondere Schwingungen, verhindert und/oder gedämpft werden.

2.   Windenenergieanlage gemäß Anspruch 1, **dadurch gekennzeichnet, dass** der oder die zusätzlichen Massen (42) zur Veränderung der Schwingungseigenfrequenz des Rotors (18) bzw. des Rotorblattes (22) derart angeordnet und/oder dimensioniert sind, dass die resultierende Schwingungseigenfrequenz des Systems aus zusätzlichen Massen (42) und Rotorblatt (22) außerhalb des Wertebereichs der für die Anlage unter den vorgegebenen Bedingungen zu erwartenden Anregungsfrequenzen liegt.

3.   Windenergieanlage gemäß Anspruch 1 oder 2, **dadurch gekennzeichnet, dass** die zusätzlichen Massen (42) und/oder die aktiven und/oder die passiven Schwingungsdämpfer im Inneren der Rotorblätter (22) angeordnet sind.

4.   Windenergieanlage gemäß einem oder mehreren der vorhergehenden Ansprüche, **dadurch gekennzeichnet, dass** durch die aktiven und/oder passiven Schwingungsdämpfer Bewegungsimpulse des Rotorblatts (22) auslösbar sind, die den auf den Turm (14) zu- und/oder von diesem weggerichteten Bewegungen des Rotorblattes (22) entgegengerichtet sind und diese zumindest teilweise kompensieren.

5.   Windenergieanlage gemäß einem oder mehreren der vorhergehenden Ansprüche, zumindest gemäß Anspruch 4, **dadurch gekennzeichnet, dass** die die auf den Turm (14) zugerichteten Bewegungen kompensierenden Bewegungsimpulse auslösbar sind, sobald die auf den Turm (14) zugerichtete Bewegung beginnt oder zu einem Zeitpunkt unmittelbar davor oder danach.

6.   Windenergieanlage mit einem von Wind antreibbaren Rotor (18) mit zumindest einem Rotorblatt (22), mit einem Generator zur Umwandlung der mechanischen Energie des Rotors (18) in elektrische Energie sowie einem Turm (14), an dem der Rotor (18) angeordnet ist, **dadurch gekennzeichnet, dass** die Windenergieanlage (10) einen aktiven Schwingungsdämpfer (24) zur Erzeugung von Bewegungsimpulsen aufweist, die einer durch äußere Einflüsse ausgelösten Bewegung des Turms (14) der Windenergieanlage (10) entgegenwirken.

7.   Windenergieanlage gemäß Anspruch 6, **dadurch gekennzeichnet, dass** der Turm (14) der Windenergieanlage (10) und/oder die Gondel (16) den aktiven Schwingungsdämpfer (24) aufweist.

8.   Windenergieanlage gemäß Anspruch 7, **dadurch gekennzeichnet, dass** der aktive Schwingungsdämpfer (24) im Inneren des Turms (14) und/oder im Inneren der Gondel (16) angeordnet ist.

9.   Windenergieanlage gemäß einem oder mehreren der vorhergehenden Ansprüche, zumindest gemäß Anspruch 6, **dadurch gekennzeichnet, dass** der aktive Schwingungsdämpfer (24) derart ausgebildet ist, dass der durch diesen auslösbare Bewegungsimpuls einer durch den Turmdurchgang jedes Rotorblattes (22) erzeugten Turmbewegung entgegenwirkt.

10.  Windenergieanlage gemäß einem oder mehreren der vorhergehenden Ansprüche, zumindest gemäß Anspruch 6, **dadurch gekennzeichnet, dass** der aktive Schwingungsdämpfer (24) über zumindest zwei gegenläufig um eine insbesondere gemeinsame Drehachse rotierende Massen (36, 40) verfügt, wobei jede Masse (36, 40) bezogen auf die Drehachse eine Unwucht aufweist.

11.  Windenergieanlage gemäß Anspruch 10, **dadurch gekennzeichnet, dass** die Drehachse vertikal verläuft.

**12.** Windenergieanlage gemäß Anspruch 10 oder 11, **dadurch gekennzeichnet, dass** die rotierenden Massen (36, 40) derart angeordnet sind und die Rotationsfrequenzen der rotierenden Massen (36, 40) derart aufeinander abgestimmt sind, dass ein der durch äußeren Einfluss ausgelösten Bewegung entgegengerichteter Gegenimpuls auslösbar ist.

**13.** Windenergieanlage gemäß Anspruch 10, 11 oder 12, **dadurch gekennzeichnet, dass** die Rotationsfrequenz der Massen (36, 40) an die Anzahl der Rotorblätter (22) angepasst ist gemäß folgender Formel:

$$\text{Frequenz}_{\text{Massenrotation}} = \frac{\text{Frequenz}_{\text{Rotorblatt}}}{\text{Anzahl Rotorblätter}}$$

**14.** Windenergieanlage gemäß einem oder mehreren der vorhergehenden Ansprüche, **dadurch gekennzeichnet, dass** die Windenergieanlage (10) Sensoren aufweist, mittels derer von dem Turm (14) weg- oder auf den Turm zugerichtete Bewegungen des Rotorblatts (22) und/oder Bewegungen des Turms (14) detektierbar sind.

**15.** Windenergieanlage gemäß einem oder mehreren der vorhergehenden Ansprüche, **dadurch gekennzeichnet, dass** nach Detektion von auf den Turm (14) zugerichteten Bewegungen des Rotorblatts (22) und/oder Bewegungen des Turms (14) geeignete, die diese Bewegungen zumindest teilweise kompensierenden Gegenimpulse der aktiven Schwingungsdämpfer auslösbar sind.

**16.** Windenergieanlage gemäß einem oder mehreren der vorhergehenden Ansprüche, **dadurch gekennzeichnet, dass** über eine geeignete Sensoreinheit die momentane Umdrehungsgeschwindigkeit des Rotorblattes (22) bestimmbar ist, wobei aus der Umdrehungsgeschwindigkeit mittels einer geeigneten Recheneinheit der Zeitpunkt nachfolgender Turmdurchgänge des Rotorblattes (22) vorbestimmbar ist und wobei Impulse der aktiven Schwingungsdämpfer zu einem errechneten Zeitpunkt eines Turmdurchganges auslösbar sind.

**17.** Verfahren zum Betreiben einer Windenergieanlage gemäß einem oder mehreren der vorhergehenden Ansprüche, **dadurch gekennzeichnet, dass** nach Detektion einer durch äußere Einflüsse ausgelösten Bewegung von Bauteilen der Windenergieanlage, insbesondere Rotorblatt- und/oder Turmbewegungen, und/oder zu Zeitpunkten, zu denen derartige Bewegungen erwartet werden, mittels eines oder mehrerer aktiver Schwingungsdämpfer den Bewegungen entgegengesetzte Bewegungsimpulse ausgelöst werden.

**18.** Verfahren gemäß Anspruch 17, **gekennzeichnet durch** ein oder mehrere Merkmale der Ansprüche 1 - 16.

**19.** Verfahren zum Betreiben einer Windenergieanlage, vorzugsweise einer Off-Shore-Windenergieanlage, insbesondere gemäß einem oder mehreren der vorhergehenden Ansprüche, wobei die Windenergieanlage (10) einen Rotor (18) mit zumindest einem Rotorblatt (22) aufweist, einen Generator zur Umwandlung der mechanischen Energie des Rotors (18) in elektrische Energie sowie einen Turm (14), an dem der Rotor (18) angeordnet ist, **dadurch gekennzeichnet, dass** ein oder mehrere Bauteile (14) der Windenergieanlage (10), vorzugsweise der Turm (14), zur Reduzierung/Verhinderung von aus Bauteilvibrationen resultierenden, Tiere und/oder Menschen störenden Schallwellen mit Gegenvibrationen beaufschlagt werden, die den Schall erzeugenden Vibrationen des Bauteils (14) entgegengerichtet sind und diese Bauteilvibrationen reduzieren bzw. verhindern.

**20.** Verfahren gemäß Anspruch 19, **dadurch gekennzeichnet, dass** die Windenergieanlage als Off-Shore-Windenergieanlage ausgebildet ist, wobei zumindest der mit Wasser bedeckte Turmabschnitt mit Gegenvibrationen beaufschlagt wird, sodass Schall erzeugende, Meerestiere störende Vibrationen dieses Turmabschnitts reduziert bzw. verhindert werden.

**21.** Verfahren gemäß Anspruch 19 oder 20, **dadurch gekennzeichnet, dass** ein oder mehrere Sensoren die Schallwellen verursachenden Bauteilvibrationen erfassen und dass die Beaufschlagung mit den Gegenvibrationen abhängig von den erfassten Bauteilvibrationen erfolgt, insbesondere abhängig von der Frequenz und der Amplitude der erfassten Bauteilvibrationen.

**22.** Verfahren gemäß einem oder mehreren der Ansprüche 19 - 21, **dadurch gekennzeichnet, dass** das Bauteil mit Gegenvibrationen beaufschlagt wird, deren Amplitude und/oder Frequenz zumindest annähernd mit der Amplitude der erfassten Bauteilvibration übereinstimmt, vorzugsweise mit dieser identisch ist.

23. Verfahren gemäß einem oder mehreren der Ansprüche 19 - 22, **dadurch gekennzeichnet, dass** die Frequenz oder Frequenzen der Gegenvibrationen aus dem für Tiere und/oder Menschen hörbaren Frequenzbereich stammen.

24. Windenergieanlage, insbesondere gemäß einem oder mehreren der vorhergehenden Ansprüche 1 - 16, mit einem von Wind antreibbaren Rotor (18) mit zumindest einem Rotorblatt (22), mit einem Generator zur Umwandlung der mechanischen Energie des Rotors (18) in elektrische Energie sowie mit einem Turm (14), an dem der Rotor (18) angeordnet ist, **dadurch gekennzeichnet, dass** die Windenergieanlage (10) zumindest einen Vibrationserzeuger aufweist, über den ein oder mehrere Bauteile (14) der Windenergieanlage, vorzugsweise der Turm (14), zur Reduzierung/Verhinderung von aus Bauteilvibrationen resultierenden, Tiere und/oder Menschen störenden Schallwellen mit Gegenvibrationen beaufschlagbar ist, die den Schall erzeugenden Vibrationen des Bauteils (14) entgegengerichtet sind und diese Bauteilvibrationen reduzieren bzw. verhindern.

25. Windenergieanlage gemäß Anspruch 24, **dadurch gekennzeichnet, dass** der Vibrationserzeuger steuerbar bewegbare Massen bzw. Massekörper (52) aufweist, die mit dem Bauteil (14) mittelbar oder unmittelbar verbunden sind und zur Erzeugung der Vibrationen relativ zum Bauteil (14) bewegbar, insbesondere beschleunigbar und/oder abbremsbar sind.

26. Windenergieanlage gemäß Anspruch 24 oder 25, **dadurch gekennzeichnet, dass** der Vibrationsgenerator im Inneren des Turms (14) ein oder mehrere, relativ zum Turm (14) bewegbare Massekörper (52) aufweist, die in einer zumindest annähernd horizontal verlaufenden Ebene steuerbar bewegbar sind.

27. Windenergieanlage gemäß einem oder mehreren der Ansprüche 24 - 26, **dadurch gekennzeichnet, dass** jeder steuerbar bewegbare Massekörper (52) entlang einer Führungsrichtung, vorzugsweise einer Führungsgeraden, geführt ist, die zumindest annähernd vom Turmzentrum bis zum Turmrandbereich verläuft, vorzugsweise bezogen auf einen kreisförmigen Turmquerschnitt entlang einer Radialrichtung.

28. Windenergieanlage gemäß einem oder mehreren der Ansprüche 23 - 27, **dadurch gekennzeichnet, dass** die bewegbaren Massekörper (52) annähernd sternförmig über den Turmquerschnitt verteilt sind.

29. Windenergieanlage gemäß zumindest Anspruch 27, **dadurch gekennzeichnet, dass** entlang einer bestimmten Führungsrichtung, nämlich einer bestimmten Führungsgeraden, zumindest zwei unabhängig voneinander steuerbar bewegbare Massekörper (52) angeordnet sind, vorzugsweise bezogen auf einen kreisförmigen Turmquerschnitt entlang einer bestimmten Radialrichtung.

30. Windenergieanlage gemäß einem oder mehreren der Ansprüche 23 - 29, **dadurch gekennzeichnet, dass** an dem Bauteil (14), insbesondere an dem Turm (14), ein oder mehrere Sensoren zu Erfassung von Bauteilvibrationen angeordnet sind.

# Fig. 1

# Fig. 2

# Fig. 3

# Fig. 4

**Europäisches Patentamt**

## EUROPÄISCHER RECHERCHENBERICHT

Nummer der Anmeldung

EP 06 02 1681

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 00/06898 A (NEG MICON A S [DK]; VELDKAMP HERMAN F [DK]) 10. Februar 2000 (2000-02-10) * Zusammenfassung; Abbildungen 1-7 * ----- | 1-5 | INV. F03D11/00 F03D11/04 F03D7/04 |
| X | WO 02/084114 A (LM GLASFIBER AS [DK]; FRYDENDAL IB [DK]) 24. Oktober 2002 (2002-10-24) * Zusammenfassung; Abbildungen 1-3 * ----- | 1-5 | |
| X | WO 99/63219 A (NEG MICON A S [DK]; VELDKAMP HERMAN F [DK]; RISAGER LARS [DK]; RASMUSS) 9. Dezember 1999 (1999-12-09) * das ganze Dokument * ----- | 6-30 | |
| X | EP 1 008 747 A2 (MITSCH FRANZ [DE]) 14. Juni 2000 (2000-06-14) * das ganze Dokument * ----- | 6-30 | |
| X | WO 99/36695 A (DANCONTROL ENG AS [DK]; GARNAES SVEND [DK]) 22. Juli 1999 (1999-07-22) * Zusammenfassung; Anspruch 1 * ----- | 6-30 | RECHERCHIERTE SACHGEBIETE (IPC) F03D |
| E | EP 1 719 910 A (MITSUBISHI HEAVY IND LTD [JP]) 8. November 2006 (2006-11-08) * das ganze Dokument * ----- | 6-30 | |
| P,X | EP 1 677 003 A (GEN ELECTRIC [US]) 5. Juli 2006 (2006-07-05) * das ganze Dokument * ----- | 6-30 | |
| P,X | EP 1 643 122 A (GEN ELECTRIC [US]) 5. April 2006 (2006-04-05) * das ganze Dokument * ----- | 3-60 | |

Der vorliegende Recherchenbericht wurde für alle Patentansprüche erstellt

| Recherchenort | Abschlußdatum der Recherche | Prüfer |
|---|---|---|
| München | 14. Februar 2007 | Avramidis, Pavlos |

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 06 02 1681

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-02-2007

| Im Recherchenbericht angeführtes Patentdokument | | Datum der Veröffentlichung | Mitglied(er) der Patentfamilie | | Datum der Veröffentlichung |
|---|---|---|---|---|---|
| WO 0006898 | A | 10-02-2000 | AT | 296955 T | 15-06-2005 |
| | | | AU | 5027199 A | 21-02-2000 |
| | | | CA | 2338891 A1 | 10-02-2000 |
| | | | CN | 1320194 A | 31-10-2001 |
| | | | DE | 69925601 D1 | 07-07-2005 |
| | | | DE | 69925601 T2 | 27-04-2006 |
| | | | EP | 1101034 A1 | 23-05-2001 |
| | | | ES | 2244202 T3 | 01-12-2005 |
| | | | JP | 2002521617 T | 16-07-2002 |
| | | | PT | 1101034 T | 31-08-2005 |
| | | | US | 6626642 B1 | 30-09-2003 |
| WO 02084114 | A | 24-10-2002 | CN | 1513084 A | 14-07-2004 |
| | | | DK | 200100599 A | 12-10-2002 |
| WO 9963219 | A | 09-12-1999 | AU | 3811199 A | 20-12-1999 |
| | | | CA | 2333717 A1 | 09-12-1999 |
| | | | CN | 1318135 A | 17-10-2001 |
| | | | DK | 71598 A | 30-11-1999 |
| | | | EP | 1082539 A1 | 14-03-2001 |
| | | | JP | 2002517660 T | 18-06-2002 |
| | | | US | 6672837 B1 | 06-01-2004 |
| EP 1008747 | A2 | 14-06-2000 | DE | 19856500 A1 | 29-06-2000 |
| WO 9936695 | A | 22-07-1999 | AT | 219553 T | 15-07-2002 |
| | | | AU | 2046499 A | 02-08-1999 |
| | | | CA | 2318386 A1 | 22-07-1999 |
| | | | CN | 1288505 A | 21-03-2001 |
| | | | DE | 69901876 D1 | 25-07-2002 |
| | | | DE | 69901876 T2 | 20-02-2003 |
| | | | DK | 1045988 T3 | 14-10-2002 |
| | | | EP | 1045988 A1 | 25-10-2000 |
| | | | ES | 2178872 T3 | 01-01-2003 |
| | | | JP | 2002509222 T | 26-03-2002 |
| | | | US | 6525518 B1 | 25-02-2003 |
| EP 1719910 | A | 08-11-2006 | AU | 2004316333 A1 | 09-09-2005 |
| | | | CA | 2557396 A1 | 09-09-2005 |
| | | | CN | 1906409 A | 31-01-2007 |
| | | | WO | 2005083266 A1 | 09-09-2005 |
| EP 1677003 | A | 05-07-2006 | AU | 2005246950 A1 | 20-07-2006 |
| | | | BR | PI0505921 A | 19-09-2006 |
| | | | CA | 2531742 A1 | 30-06-2006 |
| | | | CN | 1796774 A | 05-07-2006 |

EPO FORM P0461

Für nähere Einzelheiten zu diesem Anhang : siehe Amtsblatt des Europäischen Patentamts, Nr.12/82

## ANHANG ZUM EUROPÄISCHEN RECHERCHENBERICHT
## ÜBER DIE EUROPÄISCHE PATENTANMELDUNG NR.

EP 06 02 1681

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-02-2007

| Im Recherchenbericht angeführtes Patentdokument | Datum der Veröffentlichung | Mitglied(er) der Patentfamilie | | Datum der Veröffentlichung |
|---|---|---|---|---|
| EP 1677003 A | | JP | 2006189047 A | 20-07-2006 |
| | | MX | PA05013939 A | 10-07-2006 |
| | | US | 2006147306 A1 | 06-07-2006 |
| EP 1643122 A | 05-04-2006 | CN | 1755104 A | 05-04-2006 |
| | | US | 2006066111 A1 | 30-03-2006 |

EPO FORM P0461

Für nähere Einzelheiten zu diesem Anhang : siehe Amtsblatt des Europäischen Patentamts, Nr.12/82